# EUROPÄISCHE PATENTANMELDUNG

(11) **EP 1 072 454 A2**
(43) Veröffentlichungstag der Anmeldung: **31.01.2001**
(21) Anmeldenummer: 00113868.4
(22) Anmeldetag: 30.06.2000
(51) Int. Cl.: B60J 7/12

(54) **Verstellbares Faltdach für ein Kraftfahrzeug**

(30) Priorität: 24.07.1999 DE 19934892
(71) Anmelder: CTS Fahrzeug-Dachsysteme GmbH, 21079 Hamburg (DE)
(72) Erfinder: Neubrand, Frank, MI 48322 (US)
(74) Vertreter: Müller, Gottfried

(57) **Zusammenfassung**

Ein verstellbares Faltdach für ein Kraftfahrzeug weist einen Verdeck-Bezugstoff (3) auf, der an einem Verdeckgestänge (2) gehalten ist, welches eine Mehrzahl von gelenkig gelagerten Gestängeteilen umfaßt. Weiterhin ist im Bereich einer Fahrzeugseite ein Hauptbügel (8) angeordnet, der verschwenkbar am Kraftfahrzeug befestigt und an den ein Dichtungselement (7) gekoppelt ist.

Um ein Faltdach zu schaffen, das in Ablagestellung klein verstaut werden kann und das eine hohe Dichtigkeit bei langer Betriebsdauer ermöglicht, ist das Dichtungselement (7) an einem separat ausgebildeten Dichtungsrahmen (6) gehalten, der verschwenkbar am Kraftfahrzeug gelagert ist, wobei die Schwenkachsen des Dichtungsrahmens (6) und des Hauptbügels (8) in zumindest einer Stellung des Faltdachs mit Abstand zueinander angeordnet sind und der Dichtungsrahmen über eine Verstellkinematik (11a,b;12a,b) verschiebbar mit dem Hauptbügel (8) gekoppelt ist.

## Beschreibung

Die Erfindung betrifft ein verstellbares Faltdach für ein Kraftfahrzeug nach dem Oberbegriff des Anspruches 1.

Aus der Druckschrift DE 43 27 729 C2 ist ein für ein Kabriolett-Kraftfahrzeug vorgesehenes Faltdach bekannt, welches aus einem kinematisch verstellbaren Verdeckgestänge und einem vom Verdeckgestänge getragenen Verdeck-Bezugstoff besteht. Das Faltdach ist zwischen einer das Wageninnere überspannenden Schließstellung und einer das Wageninnere freigebenden Ablagestellung, in der das Gestänge und der Bezugstoff in einer hinter den Sitzen angeordneten Ablage verstaut sind, verstellbar. Die Gestängeteile des Faltdachs sind untereinander bzw. gegenüber dem Fahrzeug gelenkig gekoppelt und führen während der Überführung zwischen Schließ- und Ablagestellung eine räumliche Drehbewegung aus.

Die Gestängeteile umfassen diverse Seiten- und Querbügel und - spriegel, welche ohne überzähligen Freiheitsgrad kinematisch verbunden sind, so daß mit nur einer in Längsrichtung wirkenden Stellbewegung das Faltdach aufgespannt bzw. verstaut werden kann. Das Verdeck weist im Seitenbereich an der linken und rechten Fahrzeugseite jeweils einen Hauptbügel auf, der über ein Gelenk fest mit der Karosserie des Kraftfahrzeugs verbunden ist. An die beiden seitlichen Hauptbügel sind weitere, als Dachrahmen ausgebildete Seitenbügel gelenkig angeschlossen, die sich in Schließstellung bis zum Scheibenrahmen der Windschutzscheibe erstrecken und die Seitenfenster übergreifen. Um in Schließstellung einen wind- und wasserdichten Abschluß zu gewährleisten, ist am gesamten Dachrahmen einschließlich dem Hauptbügel ein umlaufendes Dichtungselement angeordnet, das beim Überführen in Schließstellung einen paßgenauen Sitz mit dem Scheibenrand bzw. dem Scheibenrahmen einnehmen muß und außerdem mit einem relativ hohen Anpreßdruck aufgesetzt werden muß. Zur Vermeidung von Dichtigkeitsproblemen muß das Faltdach eine hohe Fertigungsgenauigkeit aufweisen.

Ein weiteres Problem kann im Bereich der Stoffanbindung des Bezugstoffs an der Karosserie im Bereich der Ablage auftreten. Um ausreichend Bewegungsmöglichkeit bei der Überführung zwischen Ablage- und Schließstellung zu ermöglichen, weist der Bezugstoff einen unbefestigten Abschnitt - eine Stofflose - zwischen der Anbindung an der Karosserie und der Anbindung an die nächstliegenden Gestängeteile des Faltdachs, die Hauptbügel, auf. Aus Gründen der Dichtigkeit ist man bestrebt, die Länge der Stofflose so gering wie möglich zu halten, ohne dabei die Beweglichkeit des Faltdachs unnötig einzuschränken. Problematisch ist außerdem die unkontrollierte Faltenbildung des Bezugstoffs im unbefestigten Bereich.

Ein weiterer Nachteil liegt in dem relativ großen Platzbedarf des Faltverdecks in Ablagestellung. Aufgrund der weit hinten liegenden und nach unten versetzten Anbindung des Hauptbügels an der Fahrzeugkarosserie sowie bedingt durch die große, durchgehende Länge des Dichtungselements führt der Hauptbügel eine große, weit nach vorn und weit nach hinten reichende Stellbewegung aus. Bei zusammengelegtem Faltdach benötigt der in die Ablage nach hinten verschwenkte Hauptbügel mit dem daran befestigten Dichtungselement einen in Fahrzeuglängsrichtung im Eckbereich groß dimensionierten Ablageraum.

Ein weiteres Kabriolett-Fahrzeugdach ist aus der DE 43 44 373 C1 bekannt. Gemäß dieser Druckschrift ist eine Dichtschiene, welche Träger eines elastischen Dichtelements zur Abdichtung des Verdecks in Schließstellung ist, verschiebebeweglich an einem Dachrahmenteil des Verdeckgestänges gehalten, wodurch ein stirnseitiges Aufeinandertreffen zusammenwirkender Dichtelemente realisiert werden kann. Durch die Auftrennung in zwei separate Bauelemente - einerseits das Dachrahmenteil und andererseits die verschiebbare Dichtschiene mit dem Dichtungselement - kann ein weitgehend reibungsfreies Schließen und Öffnen der Dichtelemente erreicht werden. Die translatorische Verschiebung der Dichtschiene erfordert jedoch einen verhältnismäßig hohen konstruktiven Aufwand, außerdem ist eine Reduzierung des Stauraumes nicht zu bewerkstelligen.

Der Erfindung liegt das Problem zugrunde, ein Faltdach anzugeben, das in Ablagestellung klein verstaut werden kann und das eine hohe Dichtigkeit bei langer Betriebsdauer ermöglicht.

Dieses Problem wird erfindungsgemäß mit den Merkmalen des Anspruches 1 gelöst.

Insbesondere in Verbindung mit den beabstandeten Schwenkachsen von Hauptbügel und Dichtungsrahmen ist es möglich, den Dichtungsrahmen in Schließstellung in Fahrzeuglängsrichtung weiter nach vorne reichen zu lassen als den Hauptbügel, wodurch die Ausbildung eines langen, undurchbrochenen Dichtungselements möglich ist, welches die Seitenfenster überspannt. In Ablagestellung dagegen kann die Staulänge des Dichtungsrahmens auf maximal die Staulänge des Hauptbügels begrenzt werden. Die beabstandeten Schwenkachsen von Dichtungsrahmen und Hauptbügel erlauben unterschiedliche Erstreckungen von Dichtungsrahmen und Hauptbügel in Schließ- und in Ablagestellung, trotz gegebenenfalls gleich langer Ausbildung der Bauelemente.

Die Kopplung über die Verstellkinematik zwischen Hauptbügel und Dichtungsrahmen ermöglicht es, den Dichtungsrahmen in Abhängigkeit des Hauptbugels zu verschwenken. Die Verstellkinematik ü-berträgt die Schwenkbewegung des Hauptbügels auf den Dichtungsrahmen und trägt außerdem den beabstandeten Schwenkachsen beider Bauteile Rechnung, indem eine Relativbewegung zwischen beiden Bauteilen gestattet wird, zugleich aber in Schwenkrichtung des Dichtungsrahmens Stellkräfte vom Hauptbügel auf den Dichtungsrahmen übertragbar sind.

Neben dem geringeren Stauraum bietet die erfindungsgemäße Ausbildung die Möglichkeit, die Stofflose zwischen Karosserie und Verdeck auf ein Minimum zu beschränken, weil die Schwenkachse des Dichtungsrahmens, an dem der Bezugstoff befestigt werden kann, in einem geringeren Abstand zum Anbindungspunkt am Dichtungsrahmen festgelegt werden kann als bei herkömmlichen Vorrichtungen mit nur einem beweglichen Bauteil. Aufgrund des geringeren Abstandes zwischen Schwenkachse und Anbindungspunkt am Dichtungsrahmen beschreibt der Anbindungspunkt einen Teilkreis mit einem geringeren Radius, wodurch die Länge des unbefestigten Stoffbereichs verkürzt und dementsprechend die Dichtigkeit des Faltverdecks verbessert wird.

In einer bevorzugten Weiterbildung ist die Schwenkachse des Dichtungsrahmens beweglich angeordnet und führt in Abhängigkeit der Stellung des Faltdachs eine kinematisch zwangsgeführte Bewegung, vorzugsweise einen Teilkreis, aus, wodurch der Dichtungsrahmen eine doppelte Drehbewegung beschreibt, zum einen die Drehung um seine Schwenkachse und zum zweiten die Teilkreisbewegung der Schwenkachse selbst. Konstruktiv wird dies vorteilhaft dadurch verwirklicht, daß der Dichtungsrahmen über einen zusätzlichen Stützlenker an der Fahrzeugkarosserie gehalten ist und der Stützlenker sowohl am Kraftfahrzeug als auch am Dichtungsrahmen drehbeweglich gehalten ist. In Verbindung mit der verschieblichen Führung über die Verstellkinematik zwischen Hauptbügel und Dichtungsrahmen wird hierdurch eine kombinierte Dreh- und Verschiebebewegung des Dichtungsrahmens erzielt, wobei die zusätzliche translatorische Komponente der Bewegung den Vorteil bietet, daß durch den verbesserten Anpreßdruck eine bessere Abdichtung zwischen dem Dichtungselement und den Seitenscheiben erreicht werden kann.

Weitere Vorteile und zweckmäßige Ausführungsformen sind den weiteren Ansprüchen, der Figurenbeschreibung und den Zeichnungen zu entnehmen. Es zeigen:
- Fig. 1: eine perspektivische Ansicht auf ein Faltdach in Schließstellung für ein Kraftfahrzeug,
- Fig. 2: eine schematische Seitenansicht eines dreiteiligen seitlichen Dichtungsrahmens des Faltdaches,
- Fig. 3 bis Fig. 6: die Hauptsäule und ein Abschnitt des Dichtungs-rahmens in verschiedenen Stellungen.

Bei den in den verschiedenen Figuren dargestelltem Ausführungsbeispiel sind gleiche Bauteile mit gleichen Bezugszeichen versehen.

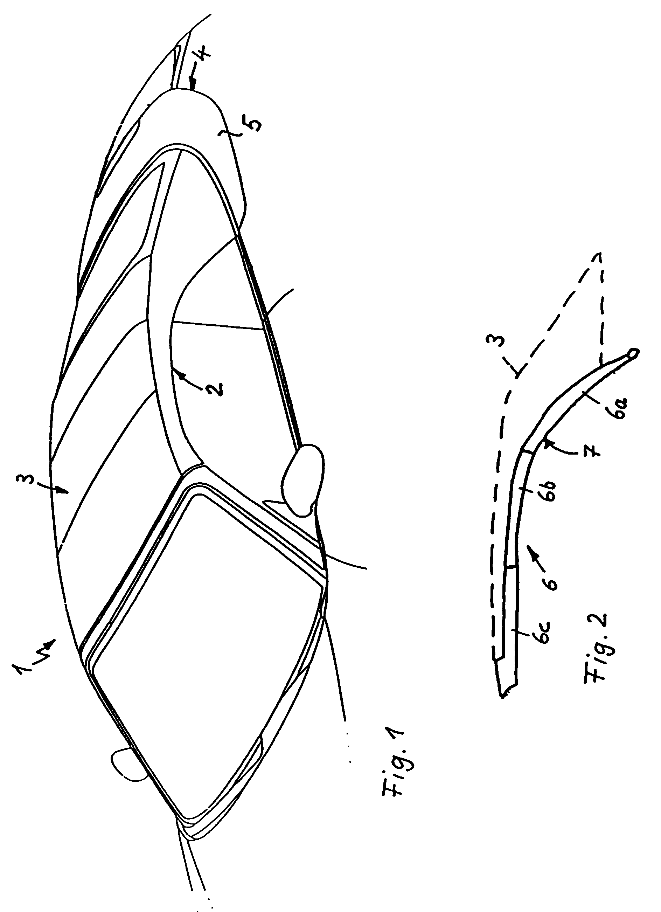

Das in Fig. 1 dargestellte Faltdach 1 eines Kraftfahrzeugs besteht aus einem Verdeckgestänge 2 mit einer Mehrzahl von Gestängeteilen und einem Verdeck-Bezugstoff 3, der auf das Verdeckgestänge aufgespannt ist. Das Faltdach 1 ist zwischen der in Fig. 1 gezeigten Schließstellung und einer Ablagestellung verstellbar, in der das Faltdach in einer hinter dem Fahrgastraum angeordneten Ablage 4, welche von einem Ablagedeckel 5 verdeckt ist, verstaut wird. Der Aufbau des erfindungsgemäßen Faltdaches 1 wird in den folgenden Figuren im Detail beschrieben.

Gemäß der schematischen Darstellung nach Fig. 2 umfaßt das Verdeckgestänge einen mehrteiligen Dichtungsrahmen 6 mit drei Abschnitten 6a, b, c, welche untereinander bzw. mit der Fahrzeugkarosserie gelenkig verbunden sind. Der Dichtungsrahmen 6 erstreckt sich in Schließstellung an einer Fahrzeugseite über die Länge des Faltdaches und weist zur Abdichtung der Seitenfenster ein Dichtungselement 7 auf, das einen wasserdichten Abschluß zwischen Faltdach und Seitenfenster ermöglicht. Bei der Überführung in die Ablagestellung verschwenken die Abschnitte 6a, b, c einschließlich des Verdeck-Bezugstoffs 3 um ihre Gelenkachsen in eine zusammengeklappte Position.

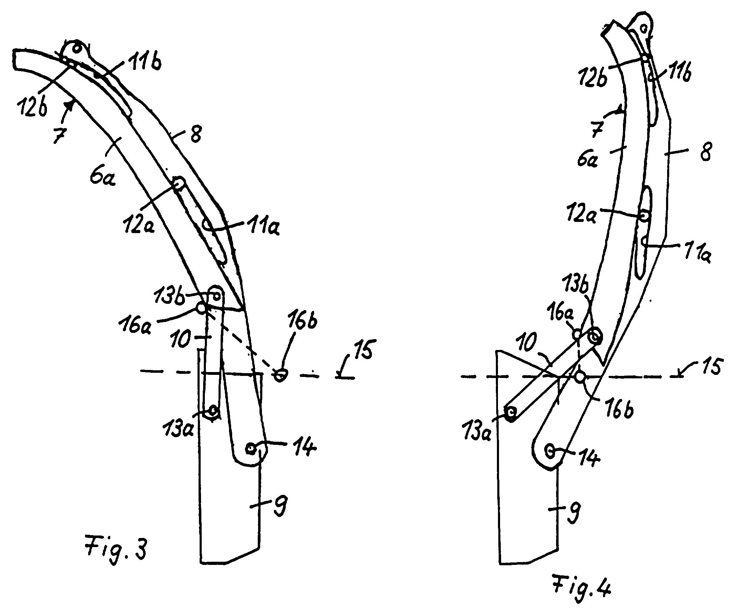

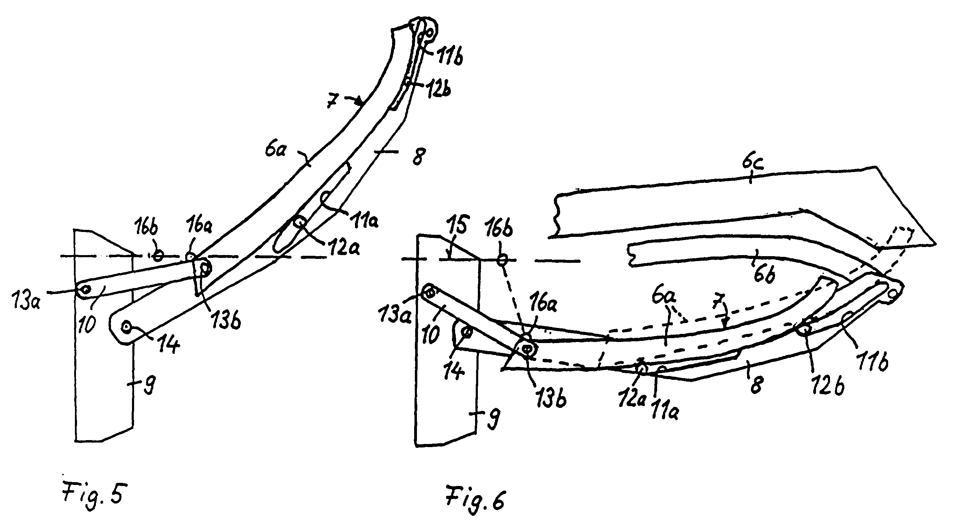

Die Fig. 3 bis 6 zeigen eine detaillierte Darstellung der seitlichen Verdeckkinematik, wobei aus Fig. 3 die Schließstellung, aus Fig. 4 und 5 verschiedene Zwischenstellungen und aus Fig. 6 die Ablagestellung zu entnehmen ist. Gemäß Fig. 3 ist der karosserieseitige Dichtungsrahmen-Abschnitt 6a, an den sich die in Fig. 2 dargestellten weiteren Dichtungsrahmen-Abschnitte 6b, 6c gelenkig anschließen, über einen Stützlenker 10 gelenkig an einem fest mit der Fahrzeugkarosserie verbundenen Flansch 9 abgestutzt. Der Stützlenker 10 weist zwei Gelenke 13a, b mit parallelen Schwenkachsen zur schwenkbaren Anbindung des Dichtungsrahmen-Abschnitts 6a an der Karosserie auf. Bei einer Drehbewegung des Stützlenkers 10 um die Schwenkachse des karosserieseitigen Gelenks 13a beschreibt die Schwenkachse des Gelenks 13b einen Teilkreis.

Weiterhin ist ein Hauptbugel 8 über ein Gelenk 14 schwenkbar am Flansch 9 gehalten. Der Hauptbügel 8, an dem zweckmäßig ein Stellelement zur Verstellung des Faltdaches zwischen Schließ- und Ablagestellung angreift, dient der zusätzlichen Abstützung des Dachrahmens sowie der Übertragung der Stellbewegung auf den Dachrahmen. Die Schwenkachse des Gelenks 14 zwischen dem Hauptbügel 8 und dem Flansch 9 liegt parallel zu den Schwenkachsen der Gelenke 13a, b am Stützlenker 10.

Der Hauptbugel 8 ist über eine Verstellkinematik, welche im Ausführungsbeispiel aus zwei Führungskulissen 11a, b im Hauptbügel 8 und zwei Führungsstiften 12a, b am Dichtungsrahmen-Abschnitt 6a besteht, kinematisch mit dem Dichtungsrahmen 6 gekoppelt, so daß eine Stellbewegung des Hauptbügels 8 eine zwangsgeführte Bewegung des Dichtungsrahmens 6 bewirkt. Die der Karosserie benachbarte Führungskulisse 11a ist geradlinig ausgebildet, so daß der in der Führungskulisse 11a gleitend gelagerte Führungsstift 12a bei einer Überführungsbewegung zwischen Schließ- und Ablagestellung translatorisch in der Führungskulisse 11a verschoben wird. Hierbei wird eine quer zur Kulissenführung gerichtete Zwangskraft vom Hauptbügel 8 über den Führungsstift 12a auf den Dichtungsrahmen-Abschnitt 6a übertragen, die den Dichtungsrahmen-Abschnitt 6a um die Schwenkachsen der Gelenke 13a, b verschwenkt. Auch über die zweite, der Karosserie abgewandte Führungskulisse 11b und den entsprechenden Führungsstift 12b ist eine Zwangskraft vom Hauptbügel auf den Dichtungsrahmen-Abschnitt 6a übertragbar, wobei die zweite Führungskulisse 11b geringfügig gebogen ausgebildet ist. Der Dichtungsrahmen-Abschnitt 6a führt unter der Führungshewegung des Hauptbügels 8 eine gemischt translatorisch-rotatorische Stellbewegung aus, mit der Folge, daß das Dichtungselement 7, das auf der dem Hauptbügel 8 abgewandten Seite des Dichtungsrahmens 6 gehalten ist, beim Überführen in Schließstellung auf dem Seitenscheibenrand entlanggleitet, wodurch die Dichtigkeit verbessert wird.

In den Endpositionen - sowohl in Schließstellung als auch in Ablagestellung - liegen die Führungsstifte 12a, b an jeweils einer Stirnseite, die Endanschläge bilden, in den Führungskulissen 11a bzw. 11b an, wodurch die Schließstellung (Fig. 3) und die Ablagestellung (Fig. 6) exakt eingehalten werden können.

Bei Überführung des Faltdaches zwischen Schließ- und Ablagestellung führt der Hauptbügel 8 ausschließlich eine Drehbewegung um die Schwenkachse des Gelenks 14 am karosserieseitigen Flansch 9 aus. Die über die Verstellkinematik vom Hauptbügel 8 auf den Dichtungsrahmen 6 übertragene Stellbewegung führt aufgrund der doppelten Lagerung des Dichtungsrahmens über den Stützlenker 10 und die zwei Gelenke 13a, b sowie aufgrund der im wesentlichen geradlinigen Ausführung der Führungskulissen in bezug zur Fahrzeugkarosserie zu einer translatorischrotatorischen Bewegung. Bei dieser Bewegung führt der karosserieseitige Dichtungsrahmen-Abschnitt 6a sowohl eine Drehbewegung um die Schwenkachse des karosserieseitigen Gelenks 13a am Stützlenker 10 als auch eine Relativdrehung um die Schwenkachse des Gelenks 13b zwischen Stützlenker 10 und Abschnitt 6a aus.

Zwischen einem ersten Anbindungspunkt 16a am Dichtungsrahmen 6 und einem zweiten, karosserieseitigen Anbindungspunkt 16b auf Höhe einer Karosserielinie 15 spannt sich der Verdeck-Bezugstoff, wobei im zwischenliegenden, mit gestrichelter Linie eingezeichneten Abschnitt zwischen den Anbindungspunkten 16a, b keine feste Stoffanbindung erfolgt, es liegt in diesem Abschnitt eine Stofflose vor.

Die Schwenkachsen der Gelenke 13a und 14 zwischen dem Stützlenker 10 bzw. dem Hauptlenker (Hauptbügel 8) und dem Flansch 9 sind voneinander beabstandet, wobei beide Schwenkachsen unterhalb einer Karosserielinie 15 liegen, die Achse des Gelenks 14 jedoch einen größeren vertikalen Abstand zur Karosserielinie 15 aufweist als die Achse des Gelenks 13a. Zudem weisen die Achsen auch einen horizontalen Abstand auf, die Achse des Gelenks 13a ist der Fahrzeug-Frontseite zugewandt, die Achse des Gelenks 14 ist dagegen dem Heckbereich des Fahrzeugs zugewandt. In Verbindung mit der erlaubten Relativbewegung zwischen Hauptbügel 8 und Dichtungsrahmen-Abschnitt 6a führt dies dazu, daß der Dichtungsrahmen-Abschnitt 6a sich in Schließstellung weiter nach vorne in Richtung der Fahrzeug-Frontseite erstreckt als der Hauptbügel 8, in Ablagestellung dagegen (Fig. 6) eine in bezug zum Hauptbügel 8 zurückgezogene Position einnimmt, verglichen mit einer festen, unverrückbaren Anbindung des Dichtungsrahmen-Abschnitts am Hauptbügel (in Fig. 6 gestrichelt eingezeichnet). Dies hat den Vorteil, daß der Ablagebereich, insbesondere die seitlichen Abschnitte des Ablagebereichs, in Fahrzeuglängsrichtung kleiner dimensioniert werden kann, weil der vergleichsweise lang ausgebildete Dichtungsrahmen-Abschnitt 6a in Ablagestellung sich weniger weit in Richtung des Fahrzeughecks erstreckt als der Hauptbügel 8.

Darüberhinaus ist der Bereich der Stofflose zwischen den Anbindungspunkten 16a, 16b reduziert, wodurch die Dichtigkeit verbessert wird. Wie ein Vergleich der Fig. 3 bis 6 unmittelbar zeigt, wird der maximale Abstand zwischen den Anbindungspunkten 16a, b in Schließstellung erreicht, in der der Verdeck-Bezugstoff jedoch unter Spannung steht, wodurch eine gute Abdichtung zur Fahrzeugkarosserie gegeben ist. Im Übergangsbereich zwischen Schließ- und Ablagestellung, dargestellt in den Fig. 4 und 5, nimmt der Abstand zwischen den Anbindungspunkten 16a, b ein Minimum ein, in Ablagestellung gemäß Fig. 6 steigt der Abstand zwar wieder an, liegt jedoch noch unter dem Abstand in Schließstellung. In sämtlichen Stellungen ist der Abstand geringer als bei herkömmlichen Ausführungen, bei denen der Bezugstoff um die Achse des Hauptbügels verschwenkt wird und einen Kreis mit größerem Radius beschreibt.

## Patentansprüche

1. Verstellbares Faltdach für ein Kraftfahrzeug, mit einem Verdeck-Bezugstoff (3), der an einem Verdeckgestänge (2) gehalten ist, welches eine Mehrzahl von gelenkig gelagerten Gestängeteilen umfaßt, mit einem im Bereich einer Fahrzeugseite angeordneten Hauptbügel (8), der verschwenkbar am Kraftfahrzeug befestigt ist, wobei das Dichtungselement (7) an einem separat ausgebildeten Dichtungsrahmen (6) gehalten ist,
**dadurch gekennzeichnet,**
daß der Dichtungsrahmen (6) separat verschwenkbar am Kraftfahrzeug gelagert ist, wobei die Schwenkachsen des Dichtungsrahmens (6) und des Hauptbügels (8) in zumindest einer Stellung des Faltdachs (1) mit Abstand zueinander angeordnet sind und der Dichtungsrahmen (6) über eine Verstellkinematik (Führungskulissen 11a, b; Führungsstifte 12a, b) verschiebbar mit dem Hauptbügel (8) gekoppelt ist.

2. Faltdach nach Anspruch 1,
**dadurch gekennzeichnet,**
daß die Schwenkachsen von Dichtungsrahmen (6) und Hauptbügel (8) in Fahrzeuglängsrichtung einen Abstand aufweisen.

3. Faltdach nach Anspruch 1 oder 2,
**dadurch gekennzeichnet,**
daß die Schwenkachsen von Dichtungsrahmen (6) und Hauptbügel (8) in Schließstellung in vertikaler Richtung einen Abstand aufweisen.

4. Faltdach nach Anspruch 3,
**dadurch gekennzeichnet,**
daß die Schwenkachse des Dichtungsrahmens (6) oberhalb der Schwenkachse des Hauptbügels (8) angeordnet ist.

5. Faltdach nach einem der Ansprüche 1 bis 4,
**dadurch gekennzeichnet,**
daß der Dichtungsrahmen (6) translatorisch verschiebbar mit dem Hauptbügel (8) gekoppelt ist.

6. Faltdach nach einem der Ansprüche 1 bis 5,
**dadurch gekennzeichnet,**
daß die Verstellkinematik zwischen Hauptbügel (8) und Dichtungsrahmen (6) einen Führungsstift (12a) in einer Führungskulisse (11a) umfaßt.

7. Faltdach nach Anspruch 6,
**dadurch gekennzeichnet,**
daß die Verstellkinematik zumindest zwei Führungsstifte (12a, b) und zwei Führungskuhlissen (11a, b) umfaßt, die über die Länge des Hauptbügels (8) verteilt angeordnet sind.

8. Faltdach nach einem der Ansprüche 1 bis 7,
**dadurch gekennzeichnet,**
daß die Schwenkachse des Dichtungsrahmens (6) bei der Verstellbewegung des Faltdaches (1) zwischen Schließ- und Ablagestellung einen Teilkreis beschreibt.

9. Faltdach nach einem der Ansprüche 1 bis 8,
**dadurch gekennzeichnet,**
daß der Dichtungsrahmen (6) über einen Stützlenker (10) am Kraftfahrzeug gehalten ist.

10. Faltdach nach Anspruch 9,
**dadurch gekennzeichnet,**
daß der Stützlenker (10) schwenkbar am Kraftfahrzeug und schwenkbar am Dichtungsrahmen (6) befestigt ist.

11. Faltdach nach einem der Ansprüche 1 bis 10,
**dadurch gekennzeichnet,**
daß der Dichtungsrahmen (6) benachbart zur Fahrzeug-Vorderseite und der Hauptbügel (8) benachbart zum Heckbereich angeordnet ist.

12. Faltdach nach einem der Ansprüche 1 bis 11,
**dadurch gekennzeichnet,**
daß die Schwenkachsen von Hauptbügel (8) und Dichtungsrahmen (6) parallel verlaufen.

13. Faltdach nach einem der Ansprüche 1 bis 12,
**dadurch gekennzeichnet,**
daß die Schwenkachse des Hauptbügels (8) quer zur Fahrzeuglängsachse verläuft.
